# EUROPEAN PATENT SPECIFICATION

(11) **EP 1 666 306 B1**
(45) Date of publication and mention of the grant of the patent: **22.10.2008**
(21) Application number: 06002021.1
(22) Date of filing: 09.12.1998
(51) Int. Cl.: B60Q 3/00, B60Q 3/02, G02B 6/00

(54) **Optical waveguide structures for vehicle lighting**
Optische Wellenleiter für Fahrzeugbeleuchtung
Structures de guides d'ondes optiques pour éclairage automobile

(30) Priority: 09.12.1997 US 69118 P; 20.01.1998 US 9836; 20.04.1998 US 62766; 02.07.1998 US 109051; 02.07.1998 US 109052; 26.08.1998 US 140281; 10.09.1998 US 150672; 21.09.1998 US 157373; 09.10.1998 US 168890
(43) Date of publication of application: 07.06.2006
(62) Divisional of application: 98965382.9
(73) Proprietor: Federal-Mogul Ignition Company, Southfield, Michigan 48034 (US)
(72) Inventor: Hulse, George R., Cookeville TN 38506 (US); Bucher, Lloyd, Keith, Cookeville TN 38501 (US); Anderson, James, Burr, Cookeville TN 38506 (US); Woodward, Ronald, O., Yorktown VA 23693 (US); Young, Joe, P., Sparta TN 38583 (US)
(74) Representative: Barker, Rosemary Anne

(56) References cited:
- EP-A- 0 515 921
- DE-A1- 3 704 469
- US-A- 4 788 630
- US-A- 5 206 562
- US-A- 5 590 945
- US-A- 5 647 657
- PATENT ABSTRACTS OF JAPAN vol. 1997, no. 04, 30 April 1997 (1997-04-30) & JP 08 318783 A (KANTO AUTO WORKS LTD), 3 December 1996 (1996-12-03)

## Description

### Technical Field

The invention relates to distributed lighting systems.

### Background

Distributed lighting systems distribute light from one or more light sources in central locations to one or more remote locations. A distributed lighting system promises several advantages over conventional lighting techniques, including low power consumption, extended life, heat reduction where the light is emitted, and increased design flexibility.

This invention is concerned with providing a distributed lighting system (DLS) for use, for example, in an automobile, and more particularly to a component utilising such a system. Issues associated with incorporating a distributed lighting system into an automobile are discussed by Hulse, Lane, and Woodward in "Three Specific Design Issues Associated with Automotive Distributed Lighting Systems: Size, Efficiency and Reliability," SAE International Congress and Exposition, Detroit, MI, February 26 - 29, 1996, and Hulse and Mullican in "Analysis of Waveguide Geometries at Bends and Branches for the Direction of Light," SAE Technical Paper Series, Paper No. 981189.

A practical distributed lighting system for an automobile must address size, efficiency, and reliability issues. To this end, a DLS may employ focus-less optics components, such as collector elements and waveguides. These components are inexpensive to manufacture, since they can be formed from plastic (acrylic, for example) in an injection molding process. In addition, they have high collecting efficiency and are very compact. For example, a collector element may be smaller than one cubic inch (16.4 cubic centimetres). Components that must handle high heat levels (eg, components that are placed in proximity to the light source) may require a ventilation system or may include portions formed from heat resistant materials, such as glass or Pyrex^{™}.

The three most demanding lighting functions in an automotive illumination system are headlamp high beams, headlamp low beams, and stop lights. These functions may be implemented using a centralized light source having waveguide outputs that transmit the light to the appropriate output points on the vehicle (ie, the headlamps and stop lights) and form beam patterns at each output location. However, inefficiencies in the light distribution components may make such a configuration impractical. One solution to this problem is to form a hybrid lighting subsystem by combining a conventional optical system, such as a headlamp, with components that receive light from the headlamp and transmit the light through waveguides or fiber optics to provide other lighting functions throughout the vehicle.

Four hybrid lighting subsystems, each including a high intensity discharge (HID) source, should provide enough light for an entire automobile. Other systems may require additional HID sources. The HID source acts as a primary light source for a particular lighting function, such as a headlamp. In addition, the HID acts as a light source for other lighting functions throughout the vehicle. Light sources other than a HID source, such as high intensity infrared (HIR), halogen, cartridge bulbs, printed circuit (PC) bulbs, and other gas discharge and incandescent bulbs, may be used. The hybrid subsystem may employ focus-less optics to receive and transmit light from the light source. Focus-less optics components include optical waveguides and collector elements, such as are described below and in US Patent Nos. 5,791,756, entitled "Distributed Lighting System" and 5,812,714, entitled "Optical Waveguide Elements for a Distributed Lighting System".
Of particular interest to this application is DE3704469 which discloses a luminous ring for car equipment, consisting of a light-conducting plastic part comprising essentially: a sleeve, an annular front collar, and a support for a light source, in which the light rays emitted by the source are transmitted to the annular collar through the sleeve in order to form a luminous circle around the equipment. The end of the sleeve opposite the collar is cut out obliquely with respect to the axis A of the sleeve proper, so as to form spiral surfaces which extend from near the support 4 of the light source towards the collar and towards the part of the sleeve diametrically opposite the support. The document discloses the use of the luminous ring for illuminating the ignition lock of an automobile. Also, US5590945 discloses a long, thin illuminated line of light is provided for highlighting components in an automotive dashboard or interior such as a cup holder or gearshift console. A point light source such as a surface mounted LED or incandescent lamp is located at one end of a light guide. An arcuate rear reflecting surface of the light guide causes total internal reflection of the light from the point light source and produces a uniform light display at a front viewing surface. The line of light can fit into deep recesses of a plastic molded console with minimal spacing (e.g., of only about 0.10 inches or 2.5mm) between walls. The line of light can also be used for aesthetic or functional displays such as for consumer electronic equipment and industrial controls.

The object of the invention is to improve on prior art arrangements, and in this regard, in a first aspect of the invention, there is provided a cup holder as set out in the appended claims.

### Brief Description of the Drawings

Fig. 1 is a block diagram of a vehicle distributed lighting system with hybrid lighting subsystems.
Fig. 2 is a side view of a hybrid headlamp subsystem.
Fig. 3 is a side view of a hybrid headlamp subsystem with a movable lens.
Figs. 4-9 show cup holder illumination components.

### Description

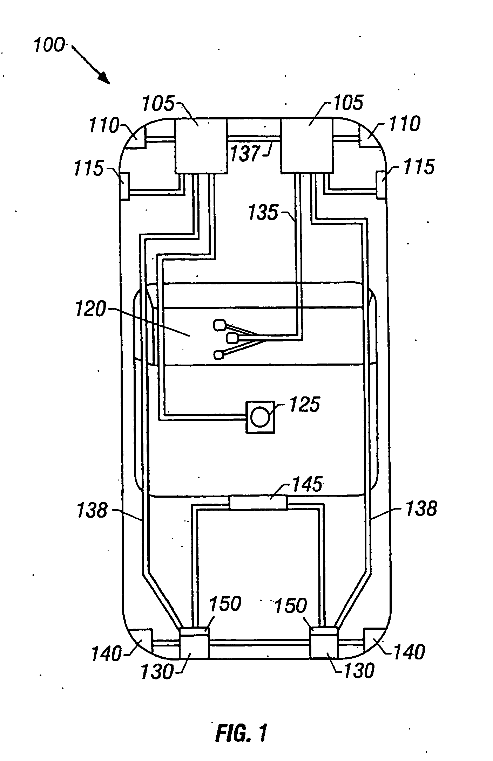

Referring to Fig. 1, a vehicle distributed lighting system (DLS) 100 includes hybrid headlamp subsystems 105, turn signal subsystems 110 and 140, and hybrid tail light subsystems 130. The hybrid headlamp subsystems 105 provide primary forward illumination for the vehicle. The headlamp subsystems 105 are also light sources for other exterior lights, such as front turn signals of the subsystems 110 and side markers 115, as well as interior lights, such as dashboard lights 120 and dome lights 125. These other lights are connected to the headlamp subsystems by optical waveguides 135 or optical fibers. Similarly, the tail light subsystems 130 provide light for rear turn signals 140 and a center high mounted stop light (CHMNSL) 145.

The subsystems of the DLS are interconnected so that the light source of one subsystem serves as a redundant light source for another subsystem. In particular, waveguides or optical fibers also may carry light from the headlamp subsystem to other subsystems that have their own light sources, such as the opposite headlamp subsystem (waveguide 137) or the corresponding tail light subsystem (waveguide 138), to provide light source redundancy. When redundancy is employed and, for example, one of the headlamps fails, light from the operational headlamp will dimly illuminate the failed headlamp. This is safer for the operator of the vehicle than having only one operational headlamp. Redundancy also may be used to reduce the effects of failure of other lighting components. For example, an incandescent printed circuit (PC) bulb (ie, a small bulb designed to be mounted on a printed circuit board (may be used as a source for trunk lighting and may be connected to provide redundancy to interior reading lights.

### Headlamp Subsystems

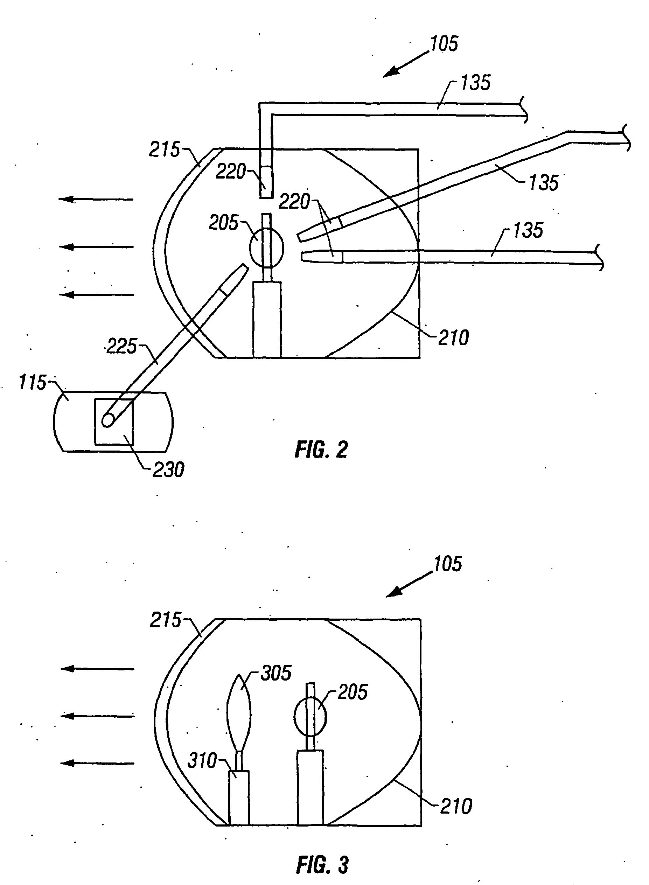

Fig. 2 illustrates a hybrid headlamp subsystem 105. The subsystem includes a light source 205 that may be implemented using, for example, a high-intensity discharge (HID) lamp. Light produced by the light source 205 is collected by a reflector 210 and directed through a lens 215 to provide the primary forward illumination for the vehicle. The reflector may be implemented as a parabolic or complex reflector.

In addition to providing the primary forward illumination the light source 205 acts as a light source for other parts of the system. As shown in Fig. 2, waveguides 135 having collector elements 220 at their ends are positioned close to the light source 205 to receive light and transmit the light to other locations in the vehicle, such as to provide turn signals, interior lighting, fog lights, and side markers. The waveguides 135 may also carry light to other lighting subsystems to provide redundancy, such as the opposite side headlamp or the tail lights. The number of collector elements 220 may be increased as necessary to supply light for other lighting functions. The collector elements 220 may be glass rods (such as PyrexTM) with ends that are polished so as to be faceted or pinched. The pinched ends increase the acceptance angle of the collector element.

A waveguide 225 carries light from the source to a side marker light 115. The waveguide 225 may include colored plastic filters 230 to provide a desired output color (eg. amber) for the side marker 115. This configuration eliminates the need for an electrical connection and light bulb in the side marker 115.

Another waveguide provides light to the turn signal subsystem 110. Alternatively, the turn signal subsystem 110 may include an independent light source and may use the input from the headlamp subsystem 105 for redundancy.

The hybrid headlamp subsystem 105 provides both high beam and low beam illumination. To this end, the subsystem may employ a number of different beam forming techniques. For example, Fig. 3 shows a simple Fresnel lens 305 that is moved by an actuator 310 between a high beam position and a low beam position. The movement of the lens 305 shifts the position of the "hot spot" (ie, the area of most concentrated light of the headlamp beam in the far field between the appropriate positions for the high and low beams. Other portions of the beam also will shift as the lens 305 moves. In addition to the lens shown, additional lenses or other optical elements (such as wedges) may be used to control the beam pattern.

In accordance with the invention, a waveguide may carry light from a hybrid headlamp subsystem to the interior of the vehicle to provide, for example dash board lighting, dome lights, and reading lights. The waveguide may also provide unique aesthetically pleasing lighting effects for certain interior structures, such as cup holders, map packets and assist grips.

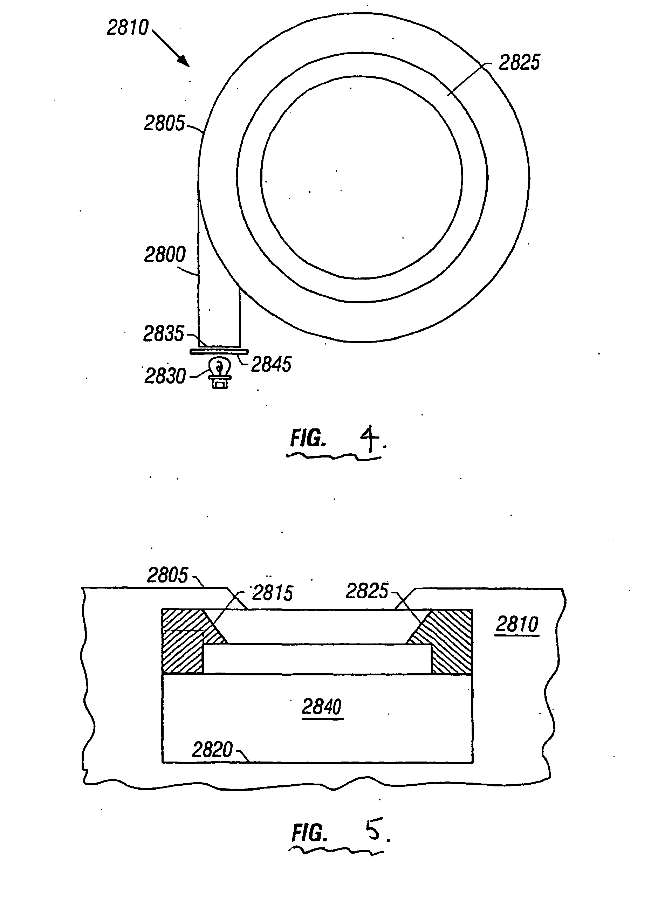

Referring to Figures 4-9, a ring-shaped waveguide element 2800 may be installed under the lip 2805 of a cup holder 2810. Although the shape of the waveguide 2800 in Figs. 4 and 5 is circular, any shape may be used depending upon the shape and size of the cup holder 2810. The efficiency of the waveguide may be improved by selecting a ratio of the inner radius (r) of the waveguide relative to the width (w) of the waveguide. For example, a waveguide with an inner radius to waveguide ratio (r/w) of 3:1 will lose less light than a ratio of 1:1 or 0.1:1.

The waveguide 2800 may have a protruding, angled upper region 2815 to reflect and/or transmit light downward toward the bottom 2820 of the cup holder 2810. The upper surface 2825 of the angled portion 2815 may be stippled and may be covered with a layer of opaque material to prevent leakage of light in the upward direction. A small incandescent bulb 2830 at the input 2835 of the waveguide is used as a source. A coloured filter 2845 may be placed between the source 2830 and the input 2835 to achieve a desired illumination colour. When illuminated, the interior 2840 of the cup holder 2810 glows faintly so as not to interfere with the driver's vision. The glowing illumination allows the occupants of the vehicle to discern the location of the cup holder 2810. Light for the waveguide 2800 also may be provided by a waveguide 135 connected to one of the lighting subassemblies.

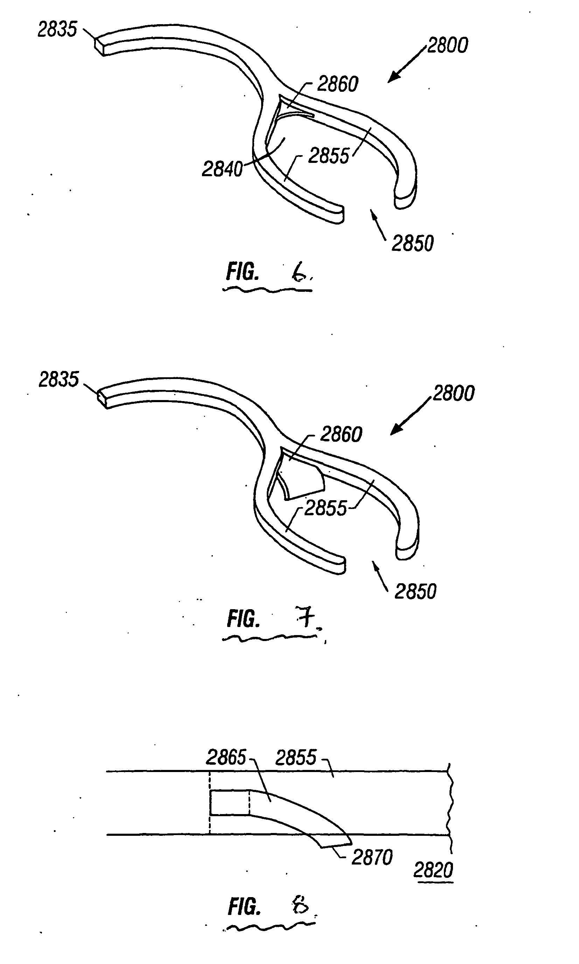

Another embodiment of the cup holder illumination waveguide 2800 is shown in Figs. 6 and 7. These "wishbone" shaped waveguides 2800 are configured for cup holders having a gap 2850 to accommodate a mug handle. Light for the waveguide 2800 enters the input 2835 and is split essentially equally to the two arms 2855 of the wishbone. The split in the waveguide 2800 may lead to a dark area in the illumination of the cup holder.
Therefore, as shown in Fig. 6, a web portion 2860 is included between the two arms 2855. The web portion may be thinner than the rest of the waveguide 2800 to provide additional illumination to the portion of the interior 2840 of the cup holder directly beneath the split in the wishbone.

Alternatively, as shown in Fig. 7, a tab 2865 may extend downward from the split to reflect and/or transmit light toward the bottom of the cup holder. The tab 2865 has a generally rectangular cross-section and curves downward toward the bottom 2820 of the cup holder. The tab 2865 may be thinner than the rest of the waveguide 2800. As shown in Fig. 8, the tab 2865 also may have a chamfered leading edge 2870.

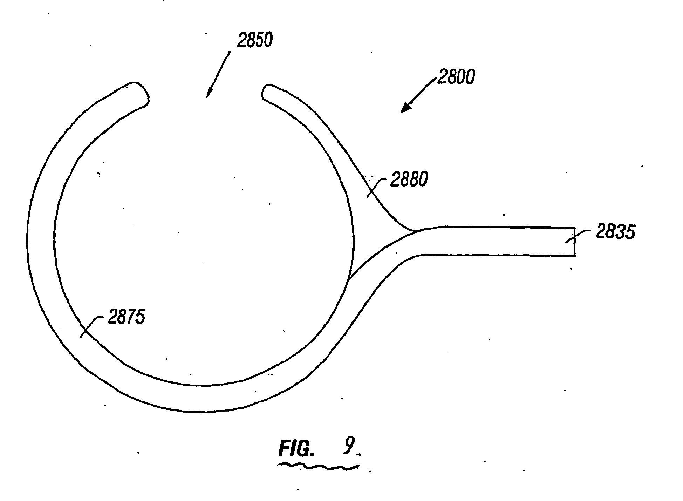

Yet another embodiment of the cup holder illumination waveguide 2800 is shown in Fig. 9. As in the previous embodiment, the waveguide 2800 is configured for cup holders having a gap 2850 to accommodate the mug handle. Light enters the input 2835 and is split unequally between a primary arm 2875 and a secondary arm 2880. The secondary arm has a smaller cross-section, (i.e., is thinner and narrower than the primary arm 2875). Since the secondary arm 2880 is shorter than the primary arm 2875, there is less loss along its length. The smaller cross-section of the secondary arm 2880 allows less light to enter the secondary arm, which balances the light in the two arms 2875 and 2880 and provides uniform illumination around the circumference of the cup holder.

## Claims

1. An illuminated cup holder assembly comprising
a cup holder (2810) including an upper lip (2805) defining an opening to a confined interior region (2840), the interior region being closed at one end by a bottom (2820),
an optical waveguide (2800) for illuminating the interior of the cup holder, said waveguide including a piece of light conducting solid material having a ring portion disposed within the interior of the cup holder proximate the upper lip,
said waveguide further including an input face (2835) configured to receive light from a light source (2830), and an input portion extending between the input face and the ring portion, and configured to confine light through total internal reflection and to direct light from the input face to the ring portion,
**characterised in that**
said ring portion of said waveguide is installed under the upper lip of the cup holder and is provided with a protruding angled upper region (2815) to release light downwardly toward the bottom of said cup holder interior.

2. The assembly of claim 1 wherein the ring portion defines an inner circumference and is configured to release light around the inner circumference.

3. The assembly of claim 1 or 2 wherein an upper surface (2825) of the angled portion is stippled.

4. The assembly of any preceding claim wherein an upper surface (2825) of the angled portion is covered with an opaque material.

5. The assembly of any preceding claim wherein a ratio of an inner radius of the ring portion to a width of the ring portion is greater than or equal to 3:1.

6. The assembly of any preceding claim wherein the ring portion defines an inner circumference and comprises a first arm and a second arm (2855) that define the inner circumference with a gap in the inner circumference.

7. The waveguide of claim 8 wherein the ring portion further comprises a web portion (2860) that extends between the first and second arms, the web portion being configured to release light along an edge of the web portion.

8. The waveguide of claim 6 or 7 wherein the ring portion further comprises a tab (2865) that extends from the inner circumference between the first and second arms.

9. The waveguide of claim 8 wherein the tab has a rectangular cross-section.

10. The waveguide of claim 8 or claim 9 wherein the tab curves toward a bottom portion of the cup holder.

11. The waveguide of any one of claims 8 to 10 wherein the tab has a chamfered leading edge (2870).

12. The waveguide of any one of claims 6 to 11 wherein the second arm (2880) has a smaller cross-section and a smaller length than the first arm (2875).

## Patentansprüche

1. Beleuchtete Becherhalteranordnung, umfassend:
einen Becherhalter (2810), einschließend einen oberen Rand (2805), welcher eine Öffnung zu einem abgegrenzten inneren Bereich (2840) definiert, wobei der innere Bereich an einem Ende mittels eines Bodens (2820) geschlossen ist,
ein optischer Wellenleiter (2800) zum Beleuchten des Inneren des Becherhalters, wobei der Wellenleiter ein Teil aus lichtleitendem, festem Material einschließt, welcher einen Ringteil aufweist, der innerhalb des Inneren des Becherhalters benachbart dem oberen Rand angeordnet ist,
**dadurch gekennzeichnet, dass**
der Ringteil des Wellenleiters unterhalb des oberen Rands des Becherhalters angebracht ist und mit einem vorragenden abgewinkelten oberen Bereich (2815) versehen ist, um Licht nach unten in Richtung des Bodens des Inneren des Becherhalters freizusetzen.

2. Anordnung gemäß Anspruch 1, wobei der Ringbereich einen inneren Umfang definiert und dazu eingerichtet ist, Licht entlang des inneren Umfangs freizusetzen.

3. Anordnung gemäß Anspruch 1 oder 2, wobei eine obere Oberfläche (2825) des abgewinkelten Teils mit punktförmigen Strukturen versehen ist.

4. Anordnung gemäß einem der vorhergehenden Ansprüche, wobei eine obere Oberfläche (2825) des abgewinkelten Teils mit einem lichtundurchlässigen Material bedeckt ist.

5. Anordnung gemäß einem der vorhergehenden Ansprüche, wobei das Verhältnis eines inneren Radius des Ringteils zu der Breite des Ringteils größer oder gleich 3:1 ist.

6. Anordnung gemäß einem der vorhergehenden Ansprüche, wobei der Ringteil einen inneren Umfang definiert und einen ersten und einen zweiten Arm (2855) umfasst, welche den inneren Umfang mit einer Lücke in dem inneren Umfang definieren.

7. Wellenleiter gemäß Anspruch 8, wobei der Ringteil weiter einen Stegteil (2860) umfasst, der sich zwischen dem ersten und zweiten Arm erstreckt, wobei der Stegteil so ausgelegt ist, dass er Licht entlang einer Kante des Stegteils freisetzt.

8. Wellenleiter gemäß Anspruch 6 oder 7, wobei der Ringteil weiter einen Streifen (2865) umfasst, der sich von dem inneren Umfang zwischen dem ersten und dem zweiten Arm erstreckt.

9. Wellenleiter gemäß Anspruch 8, wobei der Streifen einen rechteckigen Querschnitt aufweist.

10. Wellenleiter gemäß Anspruch 8 oder Anspruch 9, wobei der Streifen in Richtung eines Bodenteils des Becherhalters gekrümmt ist.

11. Wellenleiter gemäß einem der Ansprüche 8 bis 10, wobei der Streifen eine abgeschrägte Vorderkante aufweist.

12. Wellenleiter gemäß einem der Ansprüche 6 bis 11, wobei der zweite Arm (2880) einen kleineren Querschnitt und eine geringere Länge als der erste Arm (2875) aufweist.

## Revendications

1. Ensemble à support de coupelle illuminé comportant
un support (2810) de coupelle comprenant une lèvre supérieure (2805) définissant une ouverture vers une région intérieure confinée (2840), la région intérieure étant fermée à une extrémité par un fond (2820),
un guide d'ondes optique (2800) destiné à illuminer l'intérieur du support de coupelle, ledit guide d'ondes comprenant une pièce de matière solide conductrice de la lumière ayant une partie annulaire disposée dans l'intérieur du support de coupelle à proximité de la lèvre supérieure,
ledit guide d'ondes présentant en outre une face d'entrée (2835) configurée pour recevoir de la lumière provenant d'une source de lumière (2830), et une partie d'entrée s'étendant entre la face d'entrée et la partie annulaire et configurée pour confiner la lumière par réflexion interne totale et pour diriger de la lumière de la face d'entrée vers la partie annulaire,
**caractérisé en ce que**
ladite partie annulaire du guide d'ondes est mise en place en dessous de la lèvre supérieure du support de coupelle et est pourvue d'une région supérieure inclinée (2815) en saillie pour libérer de la lumière vers le bas en direction du fond dudit intérieur du support de coupelle.

2. Ensemble selon la revendication 1, dans lequel la partie annulaire définit une circonférence intérieure et est configurée pour libérer de la lumière le long de la circonférence intérieure.

3. Ensemble selon la revendication 1 ou 2, dans lequel une surface supérieure (2825) de la partie inclinée est grenée.

4. Ensemble selon l'une quelconque des revendications précédentes, dans lequel une surface supérieure (2825) de la partie inclinée est recouverte d'une matière opaque.

5. Ensemble selon l'une quelconque des revendications précédentes, dans lequel le rapport d'un rayon intérieur de la partie annulaire à la largeur de la partie annulaire est supérieur ou égal à 3:1.

6. Ensemble selon l'une quelconque des revendications précédentes, dans lequel la partie annulaire définit une circonférence intérieure et comporte une première branche et une seconde branche (2855) qui définissent la circonférence intérieure avec une lacune dans la circonférence intérieure.

7. Guide d'ondes selon la revendication 8, dans lequel la partie annulaire comporte en outre une partie d'âme (2860) qui s'étend entre les première et seconde branches, la partie d'âme étant configurée de façon à libérer de la lumière le long d'un bord de la partie d'âme.

8. Guide d'ondes selon la revendication 6 ou 7, dans lequel la partie annulaire comporte en outre une patte (2865) qui s'étend depuis la circonférence intérieure entre les première et seconde branches.

9. Guide d'ondes selon la revendication 8, dans lequel la patte a une section transversale rectangulaire.

10. Guide d'ondes selon la revendication 8 ou la revendication 9, dans lequel la patte est courbée vers une partie de dessous du support de coupelle.

11. Guide d'ondes selon l'une quelconque des revendications 8 à 10, dans lequel la patte a un bord avant chanfreiné (2870).

12. Guide d'ondes selon l'une quelconque des revendications 6 à 11, dans lequel la seconde branche (2880) a une section transversale plus petite et une longueur plus petite que celles de la première branche (2875).
